# EUROPÄISCHE PATENTSCHRIFT

(11) **EP 2 735 839 B1**
(45) Veröffentlichungstag und Bekanntmachung des Hinweises auf die Patenterteilung: **11.07.2018**
(21) Anmeldenummer: 13194633.7
(22) Anmeldetag: 27.11.2013
(51) Int. Cl.: G01B 3/50

(54) **Prüfmittel für die Höhe eines Radialspaltes**
Test device for the height of a radial gap
Moyen de contrôle de la hauteur d'un jeu radial

(30) Priorität: 27.11.2012 DE 102012221655
(43) Veröffentlichungstag der Anmeldung: 28.05.2014
(73) Patentinhaber: Rolls-Royce Deutschland Ltd & Co KG, 15827 Blankenfelde-Mahlow (DE)
(72) Erfinder: Keller, Jan, 12557 Berlin (DE)
(74) Vertreter: Maikowski & Ninnemann Patentanwälte Partnerschaft mbB

(56) Entgegenhaltungen:
- CH-A- 265 233
- JP-A- S5 739 303
- JP-A- S57 157 101
- US-B1- 8 015 722

## Beschreibung

Die Erfindung betrifft ein Prüfmittel für die Höhe eines Radialspaltes mit den Merkmalen des Anspruchs 1.

Aus dem Dokument US 8 015 722 B1 ist ein Prüfmittel für eine Turbinenspaltmessung bekannt.

Aus den Dokumenten JP S57 157101 A und JP S57 39303 A sind Längenmessgeräte für eine Endoskop bekannt.

Bei Turbomaschinen, wie z. B. einem Verdichter oder einer Turbine in einem Flugzeugtriebwerk, existieren Radialspalte zwischen drehenden und stehenden Bauteilen. So existiert ein Radialspalt zwischen der Spitze eines Rotors und dem stehenden Gehäuse der Turbomaschine bzw. zwischen der Spitze eines Stators und der drehenden Nabe.

Diese Radialspalte müssen insbesondere bei Wartungsarbeiten geprüft werden. Dabei existieren Vorschriften für untere und obere Grenzen für die Höhe des Radialspaltes. Insbesondere dürfen die Radialspalte nicht zu groß werden, da ansonsten die Spaltverluste anwachsen. Ein Massenstromanteil, der durch den Radialspalt fließt, nimmt nicht am Energieaustausch der Turbomaschine teil. Daher sind möglichst kleine Radialspalte sinnvoll. Die Radialspalte dürfen aber nicht zu klein werden, da ansonsten eine Beschädigung der Turbomaschine im Betrieb möglich ist. Auch wenn sich die Größen der Radialspalte im Betrieb z. B. durch thermische Einflüsse oder eine aktive Steuerung verändern, ist eine Überprüfung bei Wartungsarbeiten (d. h. bei einer stillstehenden Turbomaschine) notwendig. In den komplexen Turbomaschinen, wie Flugzeugtriebwerken, sind aber die Radialspalte für Messinstrumente nur schwer zugänglich.

Es besteht daher die Aufgabe Vorrichtungen zu schaffen, mit denen die Radialspalte einer stillstehenden Turbomaschine in einfacher Weise zu messen sind.

Diese Aufgabe wird durch ein Prüfmittel mit den Merkmalen des Anspruchs 1 gelöst.

Dabei weist ein Trägermittel mindestens ein Messmittel als Spaltlehre für die Bestimmung der Höhe des Radialspaltes auf, wobei das Trägermittel mit dem mindestens einen Messmittel in einer Einführposition durch eine Öffnung der Turbomaschine einführbar ist und das mindestens eine Messmittel in einer Messposition im Inneren der Turbomaschine von dem Trägermittel abklappbar.

Somit kann das Prüfmittel insbesondere zwei Zustände annehmen: Den Zustand der Einführposition, in dem der Querschnitt klein ist, und den Zustand der Messposition, in dem die Spaltlehre in den Radialspalt eingeführt werden kann. Damit kann eine Inspektion von Radialspalten im Inneren von Turbomaschinen vorgenommen werden, die auf Grund der z. T. beengten Platzverhältnisse sonst nur mit aufwändigen Mittel möglich wäre.

Dazu kann das Trägermittel im Wesentlichen als flacher Quader, insbesondere als flexibler Kunststoffstreifen, ausgebildet sein, oder im Wesentlichen stabförmig ausgebildet sein. In jedem Fall kann das Trägermittel des Prüfmittels so ausgebildet werden, dass es durch kleine Öffnungen, z. B. für Endoskope, einer Turbomaschine passt. Die Verwendung von Kunststoff hat den Vorteil, dass Teile des Prüfmittels (z. B. abgebrochene Teile) in der Turbomaschine verbleiben könnten, was mit Metallteilen nicht möglich wäre.

Das mindestens eine Messmittel ist einteilig mit dem Trägermittel ausgebildet, insbesondere ist es über ein Filmscharnier verbunden. Eine solche einteilige Ausführungsform ist einfach herstellbar.

Damit das Prüfmittel insbesondere beim Einführen in die Turbomaschine durch enge Öffnungen passt, ist das mindestens eine Messmittel in der Einführposition durch mindestens ein Arretiermittel am oder im Trägermittel arretierbar. Das mindestens eine Messmittel kann in der Messposition vorteilhafterweise durch eine Bewegung des mindestens einen Arretiermittels vom Trägermittel abklappbar sein.

Da der Raum innerhalb der Turbomaschine beengt ist, ist es vorteilhaft, wenn die Verbindung zwischen Trägermittel und dem mindestens einen Messmittel erfindungsgemäß so elastisch ausgebildet ist, dass nach dem Entfernen des Arretiermittels vom mindestens einen Messmittel das mindestens eine Messmittel automatisch aufgrund der Federkraft des Materials vom Trägermittel abklappt.

Ferner kann ein das mindestens eine Messmittel mit einem Federelement elastisch mit dem Trägermittel verbunden sein. Durch eine Federkraft kann die Bewegung in die Messposition gezielt gesteuert werden. Auch kann das mindestens eine Messmittel mit einem Feststellmittel in der Messposition arretierbar, z. B. in einem Winkel von 90° zum Trägermittel eingesetzt werden, so dass eine sichere Messung möglich ist. Insbesondere ist eine Winkelarretierung im Bereich von 85° bis 95° zum Trägermittel vorteilhaft.

Damit mehrere Messungen mit einem einzigen Prüfmittel vorgenommen werden können, ist es vorteilhaft, wenn das Trägermittel mindestens zwei Messmittel aufweist und im Falle einer länglichen Ausführung an jedem Ende ein Messmittel mit jeweils einem Arretiermittel aufweist.

In einer möglichen Ausführungsform ist das mindestens eine Arretiermittel als Hülle um das Trägermittel, insbesondere als elastische Hülle um das Trägermittel und verschieblich entlang des Trägermittels ausgebildet. Unter der Hülle kann das mindestens eine Messmittel z. B. mit einer gewissen Vorspannung gehalten werden.

Dabei ist es vorteilhaft, wenn das mindestens eine Messmittel in der Einführposition an dem Trägermittel durch das mindestens eine Arretiermittel so gehalten wird, dass der Querschnitt des Trägermittels zusammen mit dem mindestens einen Arretiermittel nicht wesentlich vergrößert wird. Damit ist eine Einführung unter beengten räumlichen Bedingungen möglich.

Vorteilhafterweise steht in der Messposition das mindestens eine Messmittel nach dem Lösen des mindestens einen Arretiermittels in einem Winkel zwischen 80 und 100°, insbesondere im Wesentlichen 90°, vom Trägermittel ab. Bei diesen Winkeln ist auch eine Prüfung von Radialspalten möglich, die seitlich der Einführöffnung in die Turbomaschine liegen.

Das Prüfmittel kann z. B. durch einen Boroscope-Stopfen (Plug) in ein Flugzeugtriebwerk eingeführt werden. Das Boroscope wird entweder parallel zum Prüfmittel durch denselben Boroscope-Stopfen eingeführt oder durch den davor oder dahinterliegenden, um jeweils das Spiel zwischen Schaufelspitze und Casing an Vorder- oder Hinterkante der Schaufel messen zu können. Je nach Bauart der Turbomaschine können nicht alle Stufen einer Prüfung mit dem Prüfmittel zugänglich sein.

Zur Prüfung des Radialspaltes ist es vorteilhaft, wenn das mindestens eine Messmittel eine definierte Dicke zwischen 0,1 und 1 mm aufweist. Auch ist es vorteilhaft, dass die Länge des Messmittels, insbesondere bei einer Anwendung in einem Flugzeugtriebwerk den gesamten axialen Bereich des jeweiligen Casing Liners entspricht. Diese Länge kann je Triebwerkstyp stark variieren, als Richtwert kann die jeweilige Schaufelhöhe minus 5 % angenommen werden. Ein Vergleich vorab mit dem jeweiligen Triebwerksmodel ist notwendig um die genaue Messmittelspitze zu definieren.

Der Vorteil einer Lehre ist, dass mit ihr schnell Aussagen über die Maßhaltigkeit möglich sind. Wenn das mindestens eine Messmittel im Sinne einer Grenzlehre so ausgebildet ist, dass unmittelbar eine Gut- oder Schlechtaussage für die Höhe des Radialspaltes möglich ist, kann bei der Wartung schnell entschieden werden, ob ein Austausch notwendig ist oder die Turbomaschine weiter betrieben werden kann.

Vorteilhafterweise ist das mindestens eine Messmittel über ein Endoskop in das Innere der Turbomaschine einführbar.

Anhand von Abbildungen werden Ausführungsformen der Erfindung beispielhaft dargestellt. Dabei zeigen:
- Fig. 1: eine Seitenansicht einer ersten Ausführungsform eines stabförmigen Prüfmittels, bevor es in eine Turbomaschine eingeführt wird;
- Fig. 2: ein Detail der Spitze des Prüfmittels aus Fig. 1;
- Fig. 3: eine Seitenansicht der Spitze der ersten Ausführungsform des Prüfmittels in Messposition;
- Fig. 4: eine zweite Ausführungsform eines stabförmigen Prüfmittels mit zwei Messmitteln;
- Fig. 5: eine schematische Darstellung der Freisetzung der Messmittel;
- Fig. 6: eine schematische Darstellung der Bestimmung eines Radialspaltes zwischen einem Rotor und einem Gehäuse;
- Fig. 7: eine schematische Darstellung der Bestimmung eines Radialspaltes zwischen einem Stator und einer Nabe.

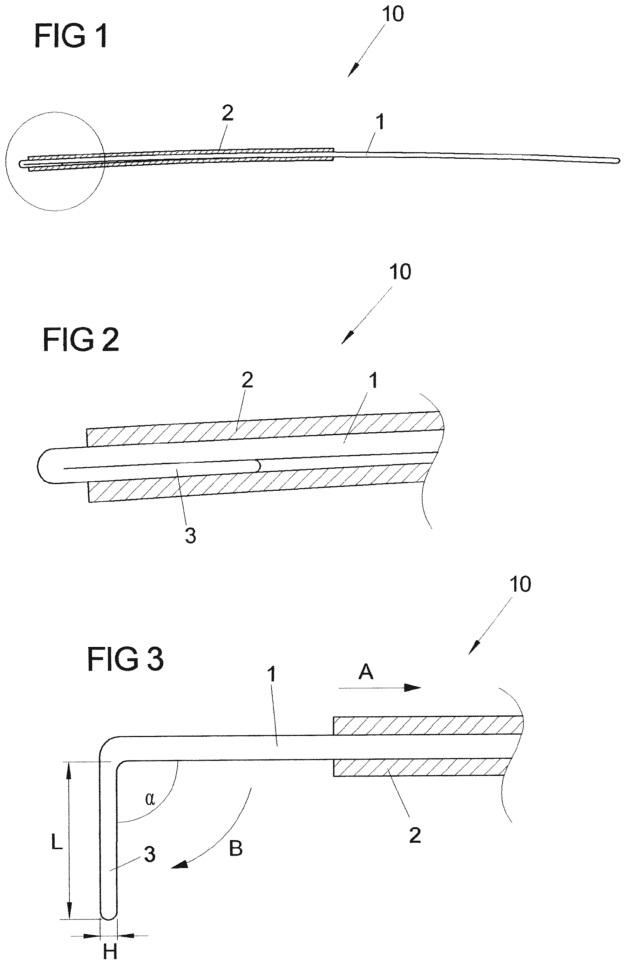

In Fig. 1 ist in einer Seitenansicht eine erste Ausführungsform eines Prüfmittels 10 für Radialspalte 4 in Turbomaschinen dargestellt, das ein streifenförmiges Trägermittel 1 aufweist. In der dargestellten Ausführungsform weist das Trägermittel 1 einen rechteckigen Querschnitt auf, wobei alternativ auch andere Querschnitte möglich sind. Das Trägermittel 1 ist aus einem Kunststoff, wie z. B. Teflon oder PTFE hergestellt, die eine hinreichende Formstabilität aufweisen.

Im vorliegenden Fall weist das Prüfmittel 10 eine Länge von 200 mm, eine Breite von 3 mm auf. Das Messmittel 3 weist eine Dicke H von 0.8 mm auf. Grundsätzlich kann die Dicke H je nach Turbomaschine variieren. Die Breite der Meßspitzen kann je nach Anwendung ebenfalls variieren, sollte jedoch immer mindestens der doppelten Dicke H des Messmittels 3, 3A, 3B entsprechen, aber nicht kleiner als 2 mm sein, um eine gute Auflage zu gewähren und ein Verkannten zu verhindern.

Eines solches Prüfmittel 10 kann in der in Fig. 1 dargestellten Einführposition auch durch kleine Öffnungen oder ein Endoskop (auch "Boroskop" oder "Borescope" genannt) geschoben werden.

Grundsätzlich kann der Anwender wählen, welches Endoskop benutzt werden soll. Generell wird ein Blickwinkel von 90° vorhanden sein, wobei das Boroskop u. U. parallel zum Messmittel 3, 3A, 3B in einen Port eingeführt wird. Das Boroskop sollte so gewählt werden, dass sein Sondendurchmesser ca. 2 mm kleiner ist als der Boroskope Port.

Allerdings besteht das Problem, dass die zu messenden Radialspalte 4 in der Regel nicht in axialer Richtung zum Trägermittel 10 liegen, sondern seitlich davon.

Im Zusammenhang mit den Fig. 1 bis 3 wird beschrieben, wie ein Messmittel 3 des Prüfmittels 10 dazu verwendet wird, in einer Messposition solche seitlich liegenden Radialspalte 4 mit dem Prüfmittel 10 zu messen. Fig. 2 zeigt dabei den durch den Kreis in Fig. 1 hervorgehobenen Teil des Prüfmittels 10.

Das Trägermittel 1 ist von einem hier hüllenförmig ausgebildeten Arretiermittel 2 umgeben, das axial auf dem Trägermittel 1 verschieblich angeordnet ist. Das Arretiermittel 2 dient dazu, das Messmittel 3 (siehe Fig. 2) am Trägermittel 1 zu halten, damit die Querschnittsfläche des Prüfmittels 10 in der Einführposition klein bleibt. Das Arretiermittel 2 ist hier als eine Art Schrumpfschlauch aus Kunststoff ausgebildet. Das Trägermittel 1 selbst ist z. B. aus Teflon oder PTFE hergestellt, die hinreichend formstabil sind.

In der ersten Ausführungsform ist das Messmittel 3 einstückig über ein Filmscharnier an der Spitze des Trägermittels 1 angeordnet. In der Einführposition (Fig. 1 und 2) ist das Messmittel 3 umgeklappt am Trägermittel 1 angeordnet und wird durch das Arretiermittel 2 in dieser Position gehalten (siehe Fig. 2).

Wird nun das Arretiermittel 2 entlang des Trägermittels 1 nach rechts verschoben (in Fig. 3 durch Pfeil A angedeutet), so klappt das Messmittel 3 automatisch auf (in Fig. 3 durch Pfeil B angedeutet), da es nicht mehr vom Arretiermittel 2 festgehalten wird. Die Verbindung zwischen Trägermittel 1 und Messmittel 3 ist dabei so gestaltet, dass das Messmittel auf Grund einer Vorspannung automatisch aufklappt und anschließend einen Winkel α von ca. 90° mit dem Trägermittel 1 bildet. Die Energie zum Aufklappen stammt bei dieser Ausführungsform aus der elastischen Vorspannung des Filmscharniers, die durch das Verschieben des Arretiermittels 2 freigesetzt wird.

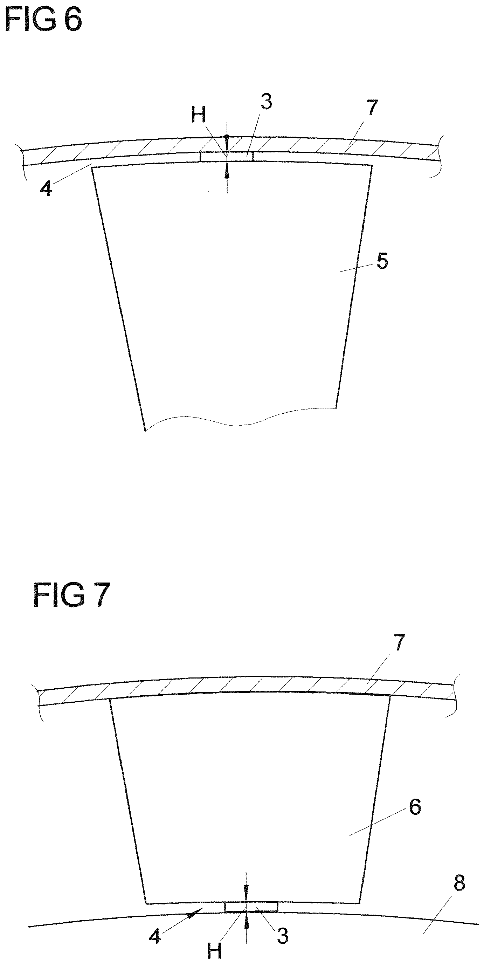

Das Messmittel 3 weist eine definierte Dicke H auf, mit der nun ein seitlich vom Prüfmittel 10 liegender Radialspalt 4 gemessen werden kann, wie dies im Zusammenhang mit Fig. 6 und 7 dargestellt ist.

Das Trägermittel 1 und das Messmittel 3 können grundsätzlich auch andere Formen aufweisen. So ist es möglich, das Trägermittel 1 stabförmig mit rundem oder prismatischem Querschnitt auszubilden. Auch in einer solchen geometrischen Anordnung ist ein Messmittel 3 an dem Trägermittel 1 angeordnet, das abklappbar ausgebildet ist. Grundsätzlich ist es auch möglich, das Messmittel 3 über ein Gelenk mit dem Trägermittel 1 zu verbinden. Die Energie zum Abklappen des Messmittels 3 könnte dann z. B. durch ein Federelement aufgebracht werden. Auch könnte ein elastisches Element am Trägermittel mit Luft aufgepumpt werden, so dass die Ausdehnung des elastischen Elements ein Ausklappen des Messmittels 3 bewirkt.

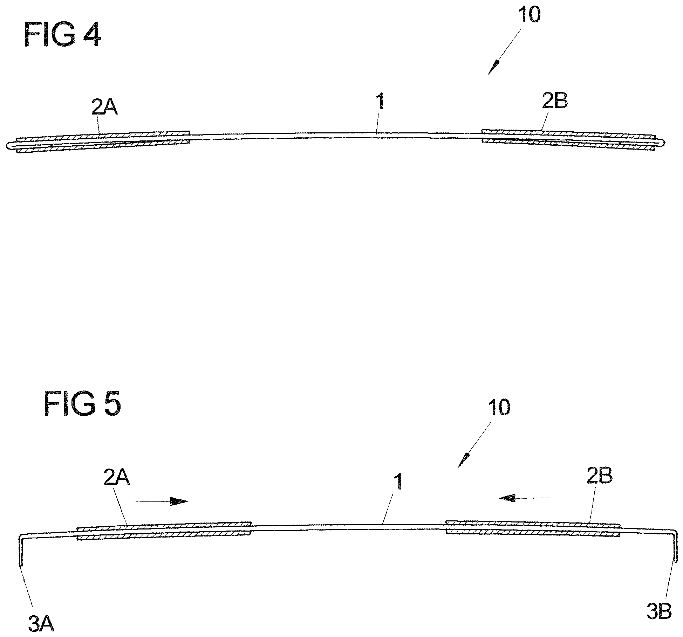

In Fig. 4 und 5 ist eine alternative Ausführungsform eines Prüfmittels 10 dargestellt, bei der zwei Messmittel 3A, 3B an den jeweiligen Enden angeordnet sind. In Fig. 4 ist die Einführposition dargestellt, bei der beide Messmittel 3A, 3B im eingeklappten Zustand dargestellt sind. In der Messposition (Fig. 5) werden jeweils die Arretiermittel 2A, 2B, in die Pfeilrichtungen bewegt, um die Messmittel 3A, 3B herausklappen zu lassen. Die Messmittel 3A, 3B an den beiden Enden weisen dabei unterschiedliche Dicken auf, so dass erst eine Messung mit dem ersten Messmittel 3A durchgeführt werden kann. Anschließend wird das Prüfmittel 10 gedreht und das noch zusammengefaltete Messmittel 3B in der Einführposition in die Turbomaschine geführt und dann freigesetzt. Mit einer solchen Anordnung können mit einem Prüfmittel 10 zwei Messungen schnell hintereinander ausgeführt werden.

In Fig. 6 wird in schematischer Weise eine axiale Ansicht eines Rotors 5 wiedergegeben, der von einem Gehäuse 7 einer Turbomaschine umgeben ist. Radial außen liegt zwischen dem Rotor 5 und dem Gehäuse 7 der Radialspalt 4 vor. In diesen Radialspalt 4 ist das Messmittel 3 mit der Dicke H eingeführt. Das Trägermittel 1 des Messmittels 3 ist in der Fig. 6 nicht dargestellt, da es z. B. durch eine Öffnung eingeführt wurde, die in Blickrichtung hinter dem Rotor 5 liegt. Das im Wesentlichen L-förmige Prüfmittel 10 erlaubt es durch den abgeknickten Teil des Messmittels 3, den Radialspalt mit einer Spaltlehre auszumessen. Die Beobachtung des Messergebnisses, d. h. die Beurteilung, ob das Messmittel 3 als Spaltlehre den Radialspalt genau ausfüllt, eine Lücke vorliegt, oder das Messmittel 3 als Spaltlehre für den Radialspalt 4 zu groß ist, erfolgt über eine optische Inspektion mittels des Endoskops. Ein typischer Wert für eine Höhe des Radialspaltes ist 1% der Schaufelhöhe (Kaltspaltmaß für ein neues Flugzeugtriebwerk).

Bei Flugzeugtriebwerken, die bereits längere Zeit im Service sind, kann Radialspalt auch größer sein. Das Prüfmittel 10 ist insbesondere auch für die Wartung von Turbomaschinen, wie Flugzeugtriebwerke geeignet, die bereits längere Zeit im Betrieb sind.

Es kann sinnvoll sein, ein Prüfmittel 10 so mit Messmitteln 3 auszustatten, dass bei einer Prüfung eine "Gut-Schlecht"-Aussage möglich ist. Ein Messmittel 3A könnte den Grenzwert für ein Mindestmaß für die Höhe des Radialspaltes 4 repräsentieren, ein anderes Messmittel 3B könnte den Grenzwert für ein Höchstmaß der Höhe des Radialspaltes 4 repräsentieren.

In Fig. 7 wird analog zu Fig. 6 die Prüfung eines Radialspaltes 4 zwischen einem Stator 6 und einer Nabe 8 einer Turbomaschine dargestellt. Auch hier erfolgt die Inspektion des Messergebnisses über ein Endoskop, das in das Gehäuse 7 der Turbomaschine eingeführt wird. Das Messmittel 3 dient auch hier als Spaltlehre.

### Bezugszeichenliste

- 1: Trägermittel
- 2: Arretiermittel
- 3: Messmittel
- 4: Radialspalt
- 5: Rotor
- 6: Stator
- 7: Gehäusewand
- 8: Nabe einer Turbomaschine

- 10: Prüfmittel

- H: Höhe des Messmittels
- L: Länge des Messmittels

## Patentansprüche

1. Prüfmittel (10) für die Höhe eines Radialspaltes zwischen einem drehenden und einem stehenden Bauteil einer Turbomaschine mit einem Trägermittel (1), das mindestens ein Messmittel (3, 3A, 3B) als Spaltlehre für die Bestimmung der Höhe des Radialspaltes (4) aufweist, wobei das Trägermittel (1) mit dem mindestens einen Messmittel (3, 3A, 3B) in einer Einführposition durch eine Öffnung der Turbomaschine einführbar ist und das mindestens eine Messmittel (3, 3A, 3B) in einer Messposition im Inneren der Turbomaschine von dem Trägermittel (1) abklappbar ist, wobei das mindestens eine Messmittel (3, 3A, 3B) einteilig mit dem Trägermittel (1) ausgebildet ist,
**dadurch gekennzeichnet, dass**
das mindestens eine Messmittel (3, 3A, 3B) in der Einführposition durch mindestens ein Arretiermittel (2, 2A, 2B) am oder im Trägermittel (1) arretierbar ist und die Verbindung zwischen Trägermittel (1) und dem mindestens einen Messmittel (3, 3A, 3B) so elastisch ausgebildet ist, dass nach dem Entfernen des Arretiermittels (2, 2A, 2B) vom mindestens einen Messmittel (3, 3A, 3B) das mindestens eine Messmittel (3, 3A, 3B) automatisch aufgrund der Federkraft des Materials vom Trägermittel (1) abklappt.

2. Prüfmittel nach Anspruch 1, **dadurch gekennzeichnet, dass** das Trägermittel (1) im Wesentlichen als flacher Quader, insbesondere als flexibler Kunststoffstreifen, ausgebildet ist, oder im Wesentlichen stabförmig ausgebildet ist.

3. Prüfmittel nach mindestens einem der vorhergehenden Ansprüche, **dadurch gekennzeichnet, dass** das mindestens eine Messmittel (3, 3A, 3B) in der Messposition durch eine Bewegung des mindestens einen Arretiermittels (2, 2A, 2B) vom Trägermittel (1) abklappbar ist.

4. Prüfmittel nach mindestens einem der vorhergehenden Ansprüche, **dadurch gekennzeichnet, dass** das mindestens eine Messmittel (3, 3A, 3B) mit einem Federelement elastisch mit dem Trägermittel (1) verbunden ist.

5. Prüfmittel nach mindestens einem der vorhergehenden Ansprüche, **dadurch gekennzeichnet, dass** das mindestens eine Messmittel (3, 3A, 3B) mit einem Feststellmittel in der Messposition arretierbar ist, insbesondere mit einer Winkelarretierung im Bereich von 85° bis 95° zum Trägermittel (1).

6. Prüfmittel nach mindestens einem der vorhergehenden Ansprüche, **dadurch gekennzeichnet, dass** das Trägermittel mindestens zwei Messmittel (3, 3A, 3B) aufweist und im Falle einer länglichen Ausführung des Trägermittels (1) an jedem Ende ein Messmittel (3, 3A, 3B) mit jeweils einem Arretiermittel (2, 2A, 2B) aufweist.

7. Prüfmittel nach mindestens einem der vorhergehenden Ansprüche, **dadurch gekennzeichnet, dass** das mindestens eine Arretiermittel (2, 2A, 2B) als Hülle um das Trägermittel (1), insbesondere als elastische Hülle um das Trägermittel (1) und verschieblich entlang des Trägermittels (1) ausgebildet ist.

8. Prüfmittel nach mindestens einem der vorhergehenden Ansprüche, **dadurch gekennzeichnet, dass** das mindestens eine Messmittel (3, 3A, 3B) in der Einführposition an dem Trägermittel (1) durch das mindestens eine Arretiermittel (2, 2A, 2B) so gehalten wird, dass der Querschnitt des Trägermittels (1) zusammen mit dem mindestens einen Arretiermittel (2, 2A, 2B) nicht wesentlich vergrößert wird.

9. Prüfmittel nach Anspruch 8, **dadurch gekennzeichnet, dass** in der Messposition das mindestens eine Messmittel (3, 3A, 3B) nach dem Lösen des mindestens einen Arretiermittels (2, 2A, 2B) in einem Winkel zwischen 80 und 100°, insbesondere im Wesentlichen 90°, vom Trägermittel (1) absteht.

10. Prüfmittel nach mindestens einem der vorhergehenden Ansprüche, **dadurch gekennzeichnet, dass** das mindestens eine Messmittel (3, 3A, 3B) eine definierte Dicke (H) zur Messung der Höhe des Radialspaltes (4) zwischen 0,1 und 1 mm aufweist.

11. Prüfmittel nach mindestens einem der vorhergehenden Ansprüche, **dadurch gekennzeichnet, dass** die Länge (L) des mindestens einen Messmittels (3, 3A, 3B), insbesondere bei einer Anwendung in einem Flugzeugtriebwerk dem gesamten axialen Bereich des jeweiligen Casing Liners entspricht.

12. Prüfmittel nach mindestens einem der vorhergehenden Ansprüche, **dadurch gekennzeichnet, dass** die Länge (L) des mindestens einen Messmittels (3, 3A, 3B) der jeweiligen Schaufelhöhe des Stators oder Rotors minus 5% ist.

13. Prüfmittel nach mindestens einem der vorhergehenden Ansprüche, **dadurch gekennzeichnet, dass** das mindestens eine Messmittel (3, 3A, 3B) über ein Endoskop in das Innere der Turbomaschine einführbar ist.

## Claims

1. Testing means (10) for the height of a radial gap between a rotating and a stationary component of a turbomachine, with a carrier means (1) having at least one measuring means (3, 3A, 3B) as a feeler gauge for determining the height of the radial gap (4), wherein the carrier means (1) with the at least one measuring means (3, 3A, 3B) is insertable in an insertion position through an opening of the turbomachine and the at least one measuring means (3, 3A, 3B) in a measuring position in the interior of the turbomachine can be swivelled from the carrier means (1), wherein the at least one measuring means (3, 3A, 3B) is designed in one piece with the carrier means (1),
**characterized in that**
the at least one measuring means (3, 3A, 3B) is lockable in the insertion position by at least one locking means (2, 2A, 2B) on or in the carrier means (1) and the connection between the carrier means (1) and the at least one measuring means (3, 3A, 3B) is designed so elastic that after the removal of the locking means (2, 2A, 2B) from the at least one measuring means (3, 3A, 3B) the at least one measuring means (3, 3A, 3B) automatically swings out from the carrier means (1) due to the spring force of the material.

2. Testing means in accordance with Claim 1, **characterized in that** the carrier means (1) is designed substantially as a flat cuboid, in particular as a flexible plastic strip, or is designed substantially rod-like.

3. Testing means in accordance with at least one of the preceding Claims, **characterized in that** the at least one measuring means (3, 3A, 3B) in the measuring position can be swivelled from the carrier means (1) by a movement of the at least one locking means (2, 2A, 2B).

4. Testing means in accordance with at least one of the preceding Claims, **characterized in that** the at least one measuring means (3, 3A, 3B) is elastically connected to the carrier means (1) using a spring element.

5. Testing means in accordance with at least one of the preceding Claims, **characterized in that** the at least one measuring means (3, 3A, 3B) is lockable in the measuring position with a locking means, in particular with an angle locking means in the range of 85° to 95° relative to the carrier means (1).

6. Testing means in accordance with at least one of the preceding Claims, **characterized in that** the carrier means has at least two measuring means (3, 3A, 3B) and in the case of an elongated design of the carrier means (1) has at each end a measuring means (3, 3A, 3B) each with a locking means (2, 2A, 2B).

7. Testing means in accordance with at least one of the preceding Claims, **characterized in that** the at least one locking means (2, 2A, 2B) is designed as an envelope around the carrier means (1), in particular as an elastic envelope around the carrier means (1) and movable along the carrier means (1).

8. Testing means in accordance with at least one of the preceding Claims, **characterized in that** the at least one measuring means (3, 3A, 3B) is held in the insertion position on the carrier means (1) by the at least one locking means (2, 2A, 2B) such that the cross-section of the carrier means (1) together with the at least one locking means (2, 2A, 2B) is not substantially increased.

9. Testing means in accordance with Claim 8, **characterized in that** in the measuring position the at least one measuring means (3, 3A, 3B) projects after release of the at least one locking means (2, 2A, 2B) at an angle between 80 and 100°, in particular substantially 90°, from the carrier means (1).

10. Testing means in accordance with at least one of the preceding Claims, **characterized in that** the at least one measuring means (3, 3A, 3B) has a defined thickness (H) for measurement of the height of the radial gap (4) between 0.1 and 1 mm.

11. Testing means in accordance with at least one of the preceding Claims, **characterized in that** the length (L) of the at least one measuring means (3, 3A, 3B), in particular in an application in an aircraft engine, corresponds to the entire axial range of the respective casing liner.

12. Testing means in accordance with at least one of the preceding Claims, **characterized in that** the length (L) of the at least one measuring means (3, 3A, 3B) corresponds to the vane/ blade height of the respective stator or rotor minus 5%.

13. Testing means in accordance with at least one of the preceding Claims, **characterized in that** the at least one measuring means (3, 3A, 3B) is insertable into the interior of the turbomachine via an endoscope.

## Revendications

1. Moyen de contrôle (10) pour la hauteur d'une fente radiale entre un composant rotatif et un composant stationnaire d'une turbomachine avec un moyen de support (1) qui présente au moins un moyen de mesure (3, 3A, 3B) sous forme de jauge de fente pour déterminer la hauteur de la fente radiale (4), sachant que le moyen de support (1) avec ledit au moins un moyen de mesure (3, 3A, 3B) est insérable dans une position d'insertion à travers une ouverture de la turbomachine et que ledit au moins un moyen de mesure (3, 3A, 3B) est rabattable du moyen de support (1) à une position de mesure à l'intérieur de la turbomachine, sachant que ledit au moins un moyen de mesure (3, 3A, 3B) forme un seul élément avec le moyen de support (1),
**caractérisé en ce que**
ledit au moins un moyen de mesure (3, 3A, 3B) dans la position d'insertion est blocable au moyen d'au moins un moyen d'arrêt (2, 2A, 2B) sur ou dans le moyen de support (1) et que la liaison entre le moyen de support (1) et ledit au moins un moyen de mesure (3, 3A, 3B) est conçue tellement élastique qu'après le retrait du moyen d'arrêt (2, 2A, 2B) dudit au moins un moyen de mesure (3, 3A, 3B), ledit au moins un moyen de mesure (3, 3A, 3B) se rabat automatiquement du moyen de support (1) en raison de la force élastique du matériau.

2. Moyen de contrôle selon la revendication n° 1, **caractérisé en ce que** le moyen de support (1) est conçu essentiellement sous forme de parallélépipède plat, notamment de bande souple en plastique, ou est essentiellement en forme de barre.

3. Moyen de contrôle selon au moins une des revendications précédentes, **caractérisé en ce que** ledit au moins un moyen de mesure (3, 3A, 3B) est rabattable du moyen de support (1) à la position de mesure par un mouvement dudit au moins un moyen d'arrêt (2, 2A, 2B).

4. Moyen de contrôle selon au moins une des revendications précédentes, **caractérisé en ce que** ledit au moins un moyen de mesure (3, 3A, 3B) est relié de manière élastique au moyen de support (1) par un élément de ressort.

5. Moyen de contrôle selon au moins une des revendications précédentes, **caractérisé en ce que** ledit au moins un moyen de mesure (3, 3A, 3B) est blocable dans la position de mesure au moyen d'un moyen d'arrêt, notamment au moyen d'un dispositif d'arrêt en angle dans une plage de 85° à 95° par rapport au moyen de support (1).

6. Moyen de contrôle selon au moins une des revendications précédentes, **caractérisé en ce que** le moyen de support présente au moins deux moyens de mesure (3, 3A, 3B) et présente, à chaque extrémité, un moyen de mesure (3, 3A, 3B) doté respectivement d'un moyen de blocage (2, 2A, 2B) dans le cas d'une version de moyen de support (1) oblongue.

7. Moyen de contrôle selon au moins une des revendications précédentes, **caractérisé en ce que** ledit au moins un moyen de blocage (2, 2A, 2B) est conçu sous forme de gaine autour du moyen de support (1), notamment sous forme de gaine élastique autour du moyen de support (1), et est déplaçable le long du moyen de support (1).

8. Moyen de contrôle selon au moins une des revendications précédentes, **caractérisé en ce que** dans la position d'insertion, ledit au moins un moyen de mesure (3, 3A, 3B) est maintenu au moyen de support (1) par ledit au moins un moyen d'arrêt (2, 2A, 2B) de manière à ce que la section du moyen de support (1) associé audit au moins un moyen d'arrêt (2, 2A, 2B) n'est pas considérablement élargie.

9. Moyen de contrôle selon la revendication n° 8, **caractérisé en ce que** dans la position de mesure, ledit au moins un moyen de mesure (3, 3A, 3B) saille du moyen de support (1), dans un angle compris entre 80 et 100°, notamment essentiellement 90°, après la libération dudit au moins un moyen d'arrêt (2, 2A, 2B).

10. Moyen de contrôle selon au moins une des revendications précédentes, **caractérisé en ce que** ledit au moins un moyen de mesure (3, 3A, 3B) présente une épaisseur définie (H) pour mesurer la hauteur de la fente radiale (4), comprise entre 0,1 et 1 mm.

11. Moyen de contrôle selon au moins une des revendications précédentes, **caractérisé en ce que** la longueur (L) dudit au moins un moyen de mesure (3, 3A, 3B) correspond à la totalité de la zone axiale du Casing Liner correspondant, notamment en cas d'utilisation dans un moteur d'avion.

12. Moyen de contrôle selon au moins une des revendications précédentes, **caractérisé en ce que** la longueur (L) dudit au moins un moyen de mesure (3, 3A, 3B) correspond à la hauteur d'aube correspondante du stator ou du rotor moins 5 %.

13. Moyen de contrôle selon au moins une des revendications précédentes, **caractérisé en ce que** ledit au moins un moyen de mesure (3, 3A, 3B) est insérable à l'intérieur de la turbomachine, au moyen d'un endoscope.
